# EUROPEAN PATENT APPLICATION

(11) **EP 4 498 279 A1**
(43) Date of publication of application: **29.01.2025**
(21) Application number: 22939118.0
(22) Date of filing: 28.04.2022
(51) Int. Cl.: G06F 40/20

(54) **METHOD AND APPARATUS FOR ADJUSTING NATURAL LANGUAGE STATEMENT, AND STORAGE MEDIUM**

(71) Applicant: Siemens Aktiengesellschaft, 80333 München (DE)
(72) Inventor: ZHOU, Zhenhua, Shanghai 200120 (CN)
(74) Representative: Isarpatent
(86) International application number: PCT/CN2022/090003
(87) International publication number: WO 2023/206267

(57) **Abstract**

A method (100) and apparatus for adjusting a natural language statement, and a storage medium. The method (100) comprises: step 101, receiving a natural language statement, which includes a placeholder, wherein the placeholder includes a type attribute, and the placeholder is occupied by a statement component matching the type attribute; step 102, determining the position of the placeholder in the natural language statement; and step 103, adding a preposition to the natural language statement on the basis of the type attribute of the placeholder and the position of the placeholder in the natural language statement. The preposition is automatically added to the natural language statement by means of the placeholder, such that the readability and accuracy of the natural language statement can be improved. In addition, when the sequence of words in the natural language statement is adjusted, the preposition is correspondingly and automatically updated, such that the readability and accuracy of the statement are ensured.

## Description

### TECHNICAL FIELD

Embodiments of this application relate to the field of natural language sentence processing technologies, and in particular, to a method and an apparatus for adjusting a natural language sentence, and a storage medium.

### BACKGROUND

Natural language generation (NLG) is a branch of artificial intelligence and computational linguistics. A corresponding language generation system is a computer model based on language information processing, which operates in a process opposite to natural language analysis, starts from an abstract concept hierarchy, and generates a text by selecting and executing specific semantic and grammatical rules. The NLG technology automatically generates an understandable natural language text by using artificial intelligence and linguistics method. The NLG technology reduces difficulty in communication between a human and a computer, and is widely applied to fields such as machine news writing and chatting robotics, and has become one of research hotspots of artificial intelligence.

Currently, how to improve readability and accuracy of a generated natural language sentence is a technical problem that needs to be resolved.

### SUMMARY

Embodiments of this application provide a method and an apparatus for adjusting a natural language sentence, and a storage medium.

According to a first aspect, an implementation of the present invention provides a method for adjusting a natural language sentence. The method includes:
receiving a natural language sentence including a placeholder, where the placeholder includes a type attribute, and the placeholder is occupied by a sentence constituent matching the type attribute;
determining a position of the placeholder in the natural language sentence; and
adding a preposition to the natural language sentence based on the type attribute of the placeholder and the position of the placeholder in the natural language sentence.

Therefore, in this implementation of the present invention, through the addition of the preposition in the natural language sentence through the type attribute of the placeholder and the position of the placeholder in the natural language sentence, readability and accuracy of the natural language sentence can be improved.

In an implementation, the adding a preposition to the natural language sentence based on a type of the placeholder and the position of the placeholder in the natural language sentence includes: determining a first sentence constituent occupying a subject placeholder in the natural language sentence as a subject of the natural language sentence; determining a second sentence constituent occupying a predicate placeholder in the natural language sentence as a predicate of the natural language sentence; determining a third sentence constituent occupying an object placeholder in the natural language sentence as an object of the natural language sentence; adding a first preposition between the subject and the object when the object is located between the subject and the predicate; and adding a second preposition between the object and the subject when the object is located before the subject and the predicate. It may be learned that different types of prepositions may be added based on a position of the object, which is more in line with a natural language habit.

In an implementation, the adding a preposition to the natural language sentence based on a type of the placeholder and the position of the placeholder in the natural language sentence includes: determining a fourth sentence constituent occupying a complement placeholder in the natural language sentence as a first complement of the natural language sentence, where the first complement is determined based on a user input; and adding a third preposition before the first complement. It may be learned that the preposition may be added for the complement determined based on the user input.

In an implementation, the adding a preposition to the natural language sentence based on a type of the placeholder and the position of the placeholder in the natural language sentence includes: determining a fifth sentence constituent occupying the complement placeholder in the natural language sentence as a second complement of the natural language sentence, where the second complement is determined based on output data of a service operation, and the service operation is determined based on the predicate occupying the predicate placeholder in the natural language sentence; and adding a fourth preposition before the second complement. It may be learned that the preposition may be added for the complement determined based on the output data of the service operation.

In an implementation, the adding a preposition to the natural language sentence based on a type of the placeholder and the position of the placeholder in the natural language sentence includes: determining a sixth sentence constituent occupying an adverbial placeholder in the natural language sentence as an adverbial of the natural language sentence, where the adverbial is determined based on input data of the service operation, and the service operation is determined based on the predicate occupying the predicate placeholder in the natural language sentence; and adding a fifth preposition before the adverbial.

It may be learned that the prepositions may be added for a plurality of types of adverbials, which is more in line with the natural language habit.

In an implementation, the method further includes: moving the placeholder in the natural language sentence based on a user-triggered instruction; determining an updated position of the placeholder in the natural language sentence; and updating the preposition in the natural language sentence based on the type attribute of the placeholder and the updated position of the placeholder in the natural language sentence.

It may be learned that, when the placeholder of the natural language sentence is moved, the preposition is updated correspondingly, thereby ensuring the readability and the accuracy of the sentence.

In an implementation, the natural language sentence is adapted to describe a workflow. The workflow represents that a resource in a workcell performs the service operation.

Therefore, the preposition may be added to the natural language sentence describing a workflow, thereby improving execution efficiency of the workflow.

In an implementation, the method further includes: converting the natural language sentence into a low-code representation describing the workflow; parsing the low-code representation, to obtain a workflow represented in a form of node link assembly; and compiling and downloading the workflow represented in the form of the node link assembly to runtime of a main controller of a corresponding workcell, to execute the workflow.

Therefore, the natural language sentence describing the workflow is converted into the low-code representation executing the workflow, which improves processing efficiency of the workflow.

According to a second aspect, an implementation of the present invention provides an apparatus for adjusting a natural language sentence. The apparatus includes: a receiving module, configured to receive a natural language sentence including a placeholder, where the placeholder includes a type attribute, and the placeholder is occupied by a sentence constituent matching the type attribute; a determining module, configured to determine a position of the placeholder in the natural language sentence; and an addition module, configured to add a preposition to the natural language sentence based on the type attribute of the placeholder and the position of the placeholder in the natural language sentence.

In an implementation, the addition module is configured to: determine a first sentence constituent occupying a subject placeholder in the natural language sentence as a subject of the natural language sentence; determine a second sentence constituent occupying a predicate placeholder in the natural language sentence as a predicate of the natural language sentence; determine a third sentence constituent occupying an object placeholder in the natural language sentence as an object of the natural language sentence; add a first preposition between the subject and the object when the object is located between the subject and the predicate; and add a second preposition between the object and the subject when the object is located before the subject and the predicate.

In an implementation, the addition module is configured to: determine a fourth sentence constituent occupying a complement placeholder in the natural language sentence as a first complement of the natural language sentence, where the first complement is determined based on a user input; and add a third preposition before the first complement.

In an implementation, the addition module is configured to: determine a fifth sentence constituent occupying the complement placeholder in the natural language sentence as a second complement of the natural language sentence, where the second complement is determined based on output data of a service operation, and the service operation is determined based on the predicate occupying the predicate placeholder in the natural language sentence; and add a fourth preposition before the second complement.

In an implementation, the addition module is configured to: determine a sixth sentence constituent occupying an adverbial placeholder in the natural language sentence as an adverbial of the natural language sentence, where the adverbial is determined based on input data of the service operation, and the service operation is determined based on the predicate occupying the predicate placeholder in the natural language sentence; and add a fifth preposition before the adverbial.

In an implementation, the apparatus further includes an update module, configured to: move the placeholder in the natural language sentence based on a user-triggered instruction; determine an updated position of the placeholder in the natural language sentence; and update the preposition in the natural language sentence based on the type attribute of the placeholder and the updated position of the placeholder in the natural language sentence.

In an implementation, the natural language sentence is adapted to describe a workflow. The workflow represents that a resource in a workcell performs the service operation.

In an implementation, the apparatus further includes an execution module, configured to: convert the natural language sentence into a low-code representation describing the workflow; parse the low-code representation, to obtain a workflow represented in a form of node link assembly; and compile and download the workflow represented in the form of the node link assembly to runtime of a main controller of a corresponding workcell, to execute the workflow.

According to a third aspect, an implementation of the present invention provides an apparatus for adjusting a natural language sentence. The apparatus includes: at least one memory, configured to store computer-readable code; and at least one processor, configured to invoke the computer-readable code to perform the steps of the above method for adjusting a natural language sentence in any of the above implementations.

According to a fourth aspect, an implementation of the present invention provides a computer-readable storage medium. The computer-readable storage medium stores computer-readable instructions. The computer-readable instructions, when executed by a processor, cause the processor to perform the steps of the above method for adjusting a natural language sentence in any of the above implementations.

According to a fifth aspect, an implementation of the present invention provides a computer program product. The computer program product is tangibly stored in a computer-readable medium, and includes computer-readable instructions. The computer-readable instructions, when executed, cause at least one processor to perform the steps of the method for adjusting a natural language sentence in any of the above implementations.

### BRIEF DESCRIPTION OF THE DRAWINGS

FIG. 1 is an exemplary flowchart of a method for adjusting a natural language sentence according to an embodiment of this application.
FIG. 2A exemplarily shows an exemplary schematic diagram for describing a workflow in a low-code architecture provided according to an embodiment of this application in a no-code manner according to an embodiment of this application.
FIG. 2B is a schematic diagram of an interaction based on a language element library according to an embodiment of this application.
FIG. 2C is a schematic diagram of a universal language word order template of a standard operating procedure (SOP) according to an embodiment of this application.
FIG. 2D is a schematic diagram of an architecture for automatically adjusting a word order position according to an embodiment of this application.
FIG. 2E is an exemplary schematic diagram of automatically adjusting a word order according to an embodiment of this application.
FIG. 2F is an exemplary schematic diagram of an overall semantic editing process according to an embodiment of this application.
FIG. 3 is an application scenario of a method for adjusting a natural language sentence in an industrial automation field according to an embodiment of this application.
FIG. 4 is an exemplary structural diagram of an apparatus for adjusting a natural language sentence according to embodiments of this application.
FIG. 5 is an exemplary structural diagram of an apparatus for adjusting a natural language sentence according to embodiments of this application.

Reference numerals are as follows:

| | |
|---|---|
| 100 | Method for adjusting a natural language sentence |
| 101 to 103 | Step |
| 302 | No-code universal language editor |
| 303 | No-code semantic standard operating procedure (SOP) editor |
| 304 | Universal runtime engineering exchange model |
| 305 | Low-code behavior tree/function block type diagram (FBTD) |
| 306 | Interpreter-driven runtime |
| 307 | Logic library |
| 308 | Resource library |
| 309 | Function block library |
| 310 | Customized thesaurus |
| 311 | Bill of materials (BOM) |
| 312 | Universal language extension thesaurus |
| 313 | Keypoint library |
| 400 | Language element library |
| 401 | Subject placeholder |
| 402 | Predicate placeholder |
| 403 | Adverbial placeholder |
| 404 | Object placeholder |
| 405 | Logic placeholder |
| 406 | Annotation placeholder |
| 407 | Semantic expression placeholder |
| 408 | Exception placeholder |
| 409 | Keypoint placeholder |
| 410 | Figure placeholder |
| 411 | Video placeholder |
| 412 | Attributive placeholder |
| 413 | Complement placeholder |
| 414 | Automatic generation processing |
| 415 | Automatic label generation processing |
| 416 | Automatic preposition generation processing |
| 417 | Label |
| 418 | Subject thesaurus |
| 419 | Natural language sentence after a subject is determined |
| 420 | Natural language sentence after a predicate placeholder is dragged |
| 421 | Predicate thesaurus |
| 422 | Natural language sentence after a predicate is determined |
| 431 | SOP template |
| 432 | Rule-based linking engine |
| 433 | Preposition |
| 434 | Prepositive preposition |
| 435 | Postpositive preposition |
| 436 | Specific language grammar |
| 437 | Chinese semantic thesaurus |
| 438 | English semantic thesaurus |
| 450 | Complement-to-subject conversion processing |
| 750 | Subject placeholder dragging processing |
| 751 | Subject determining and predicate placeholder dragging processing |
| 752 | Predicate determining processing |
| 753 | Object placeholder dragging and first preposition generation processing |
| 754 | Object determining processing |
| 755 | Adverbial placeholder dragging, adverbial determining, and second preposition generation processing |
| 756 | Complement placeholder dragging, complement determining, and second preposition generation processing |
| 757 | Attributive placeholder dragging and attributive determining processing |
| 758 | Word order adjustment processing |
| 10 | low-code development tool of an operational technology (OT) domain |
| 20 | Microservice generator of the OT domain |
| 30 | Runtime on a main controller of a workcell |
| 200 | Knowledge platform |
| 301 | Code development tool of an intelligence technology (IT) domain |
| 700 | Apparatus for adjusting a natural language sentence |
| 701 | Receiving module |
| 702 | Determining module |
| 703 | Addition module |
| 704 | Update module |
| 705 | Execution module |
| 500 | Apparatus for adjusting a natural language sentence |
| 501 | Memory |
| 502 | Processor |

### DETAILED DESCRIPTION

A subject described herein is discussed now with reference to exemplary implementations. It should be understood that, discussion of the implementations is merely intended to make a person skilled in the art better understand and implement the subject described herein, and is not intended to limit the protection scope of the claims, the applicability, or examples. Changes may be made to functions and arrangements of the discussed elements without departing from the protection scope of the content of the embodiments of this application. Various processes or constituents may be omitted, replaced, or added in each example as required. For example, the described method may be performed based on an order different from the order described herein, and steps may be added, omitted, or combined. In addition, features described with respect to some examples may also be combined in another example.

As used herein, a term "include" and its variants represent open terms, and mean "including but not limited to". The term "based on" means "at least partially based on". Terms "one embodiment" and "an embodiment" mean "at least one embodiment". A term "another embodiment" means "at least one other embodiment". Terms "first", "second", and the like may represent different objects or the same object. Other definitions may be included explicitly or implicitly in the following. Unless otherwise clearly specified in the context, a definition of a term is consistent throughout the specification.

Currently, a processing manner in which a natural language sentence is generated by using artificial intelligence such as machine learning or deep learning exists. The applicant founds that, the artificial intelligence generation manner requires a large number of computing resources, has high operating complexity, and is often not suitable for an application scenario that is sensitive to computing resources and operating complexity (for example, an industrial site). In addition, ensuring readability and accuracy of the natural language sentence without significantly occupying computing resources is also a problem.

An implementation of the present invention provides a method for adjusting a natural language sentence. Through automatically addition of a preposition to a natural language sentence determined based on a placeholder filling operation readability and accuracy of the natural language sentence is improved.

The "preposition" herein is a vocabulary or an affix used for expressing a grammatical function of a word in grammar. The preposition is generally used before a pronoun or a noun phrase, and forms a preposition structure with the words, to represent a word such as a place, time, a state, a manner, a reason, a purpose, or a comparison object.

For example, the preposition may include: (1). a preposition positioned before a time or a place, such as since, in, to, toward, at, when, toward, with, along, following, or the like; (2). a preposition positioned before a manner, such as according to, on the basis of, in accordance with, in line with, by way of, through, based on, by, by means of, or the like; (3). a preposition positioned before a purpose, such as for, for the sake of, or the like; (4). a preposition positioned before a reason, such as due to, since, because, only, or the like; (5). a preposition positioned before an object or content, such as to, for, by, from, following, with, about, or the like; (6). a preposition positioned before excluding, such as except, besides, unless, or the like; (7). a preposition positioned before passivity, such as is/are, named, allowed, given, enabled, or the like; (8). a preposition positioned before comparison, such as than, to, as, or the like; and (9). a preposition positioned before an identity: such as as and the like.

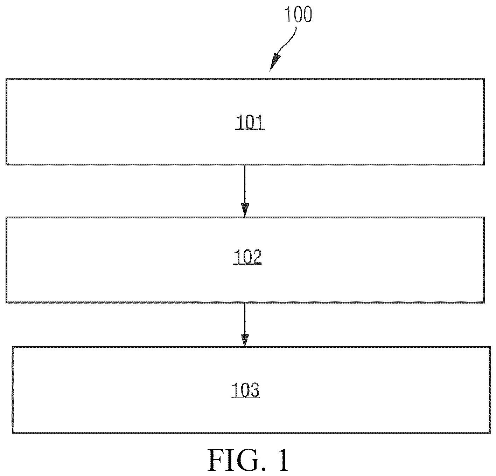

FIG. 1 is an exemplary flowchart of a method for adjusting a natural language sentence according to an embodiment of this application. As shown in FIG. 1, the method 100 includes:
Step 101: Receive or obtain a natural language sentence including a placeholder, where the placeholder includes a type attribute, and the placeholder is occupied by a sentence constituent matching the type attribute.
Step 102: Determine a position of the placeholder in the natural language sentence.
Step 103: Add a preposition to the natural language sentence based on the type attribute of the placeholder and the position of the placeholder in the natural language sentence.

In an implementation, receiving or obtaining a natural language sentence including a placeholder in step 101 may be receiving or obtaining, for example, a natural language sentence, a paragraph of the natural language sentence, or a discourse-level natural language sentence inputted through a natural language compilation tool. Preferably, the natural language compilation tool may provide a human-computer interaction interface interaction interface including a plurality of placeholders. The natural language compilation tool receives a user dragging operation through the human-computer interaction interface, to select the placeholder corresponding to the sentence constituent, and move the position of the placeholder in the natural language sentence. Moreover, the natural language compilation tool may select from a thesaurus through the human-computer interaction interface or directly provide user input, to determine the corresponding sentence constituent occupying placeholder.

In an implementation, the receiving a natural language sentence including a placeholder in step 101 further includes: receiving, from the human-computer interaction interface, the natural language sentence that is generated based on a deep learning algorithm and includes the placeholder.

A specific implementation of receiving the natural language sentence is exemplarily described above. A person skilled in the art may realize that the description is merely exemplary and is not intended to limit the protection scope of the implementations of the present invention.

In an implementation, step 103 specifically includes: determining a first sentence constituent occupying a subject placeholder in the natural language sentence as a subject of the natural language sentence; determining a second sentence constituent occupying a predicate placeholder in the natural language sentence as a predicate of the natural language sentence; determining a third sentence constituent occupying an object placeholder in the natural language sentence as an object of the natural language sentence;
adding a first preposition (for example, by) corresponding to an active voice between the object and the subject when the object is located between the subject and the predicate; and adding a second preposition (for example, is/are) corresponding to a passive voice between the object and the subject when the object is located before the subject and the predicate.

In an implementation, step 103 specifically includes: determining a fourth sentence constituent occupying a complement placeholder in the natural language sentence as a first complement of the natural language sentence, where the first complement is determined based on a user input; and adding a third preposition (for example, from or to) before the first complement.

In an implementation, step 103 specifically includes: determining a fifth sentence constituent occupying the complement placeholder in the natural language sentence as a second complement of the natural language sentence, where the second complement is determined based on output data of a service operation, and the service operation is determined based on the predicate occupying the predicate placeholder in the natural language sentence; and adding a fourth preposition (for example, from or to) before the second complement.

When the first complement is a starting object of a service operation, the third preposition is a preposition (for example, from) adapted to the starting object. When the first complement is an end object of the service operation, the third preposition is a preposition (for example, to) adapted to the end object.

In an implementation, step 103 specifically includes: determining a sixth sentence constituent occupying an adverbial placeholder in the natural language sentence as an adverbial of the natural language sentence, where the adverbial is determined based on input data of the service operation, and the service operation is determined based on the predicate occupying the predicate placeholder in the natural language sentence; and add a fifth preposition (for example, to) before the adverbial.

Preferably, a change instruction (for example, a touch instruction for an automatically generated preposition on an interface) for changing an automatically generated preposition is received, a preposition thesaurus is displayed in response to the change instruction, so that a user selects a change preposition to replace the automatically generated preposition, and replace the automatically generated preposition with the change preposition. It may be learned that the automatically generated preposition may be modified based on the user instruction, thereby further improving readability.

In an implementation, the method 100 further includes: moving the placeholder in the natural language sentence based on a user-triggered instruction; determining an updated position of the placeholder in the natural language sentence; and updating the preposition in the natural language sentence based on the type attribute of the placeholder and the update position of the placeholder in the natural language sentence.

In an implementation, the method 100 further includes: the natural language sentence is adapted to describe a workflow. The workflow represents that a resource in a workcell performs the service operation. In an implementation, the method 100 for adjusting a natural language sentence further includes: converting the natural language sentence into a low-code representation describing the workflow; parsing the low-code representation, to obtain a workflow represented in a form of node link assembly; and compiling and downloading the workflow represented in the form of the node link assembly to runtime of a main controller of a corresponding workcell, to execute the workflow.

In an implementation of the present invention, a method for describing a workflow (for example, an information technology (IT)/operational technology (OT) process) as a natural language sentence by using semantic language elements. The semantic language elements may come from a predetermined thesaurus. Through the method for adjusting a natural language sentence in this implementation of the present invention, a semantic standard operating procedure (SOP) or a more commonly used local language can be inputted into a low-code platform, and a corresponding low-code workflow can be executed finally at runtime. Correspondingly, in this implementation of the present invention, definitions of the semantic language elements are extended, to provide support for necessary low-code constituents such as a behavior tree logic, a semantic expression, an exception, a keypoint, an annotation, a figure, a video, and an index marking. Therefore, bidirectional semantic conversion between a no-code representation and a low-code representation (for example, a function block type diagram (FBTD) and an Internet of Things (IoT) behavior tree) becomes possible. An embodiment of this application provides a method for generating a natural language sentence describing a workflow. The method for adjusting a natural language sentence shown in FIG. 1 may be applied to the natural language sentence provided in this embodiment of this application and describing the workflow for adjustment.

Specifically, the method for generating a natural language sentence describing a workflow includes:
Step 1: Determine a subject placeholder based on a first selection operation performed on a language element library.

Herein, the language element library includes a plurality of types of placeholders. For example, the plurality of types of placeholders are listed in the language element library on a human-computer interaction interface in forms of icons. Each placeholder includes a type attribute, and each placeholder is adapted to be occupied by a sentence constituent matching the type attribute.

For example, sentence constituents of modern Chinese usually include a subject, a predicate, an object, a verb, an attributive, an adverbial, a complement, a head, and the like. Therefore, a language element library of Chinese may include a subject placeholder, a predicate placeholder, an object placeholder, a verb placeholder, an attributive placeholder, an adverbial placeholder, a complement placeholder, a head placeholder, and the like. Similarly, sentence constituents of an English sentence usually include a subject, a predicate, an object, a predicative, an attributive, an adverbial, a complement, and an appositive. Correspondingly, a language element library of English may include a subject placeholder, a predicate placeholder, an object placeholder, a predicative placeholder, an attributive placeholder, an adverbial placeholder, a complement placeholder, and an appositive placeholder. For another language or local language, similar placeholders may be set based on a language habit and a grammar.

In a specific application, a user may first select the subject placeholder from the language element library through, for example, a human-computer interaction interface, and drag the subject placeholder to a natural language sentence editing interface to determine the subject placeholder.

Step 2: Determine, from a subject thesaurus associated with the subject placeholder, a subject occupying the subject placeholder, where the subject corresponds to a resource.

For example, the resource may be a resource in a workcell according to the present invention, or may be a resource in a resource library in another type of low-code platform. The workcell may be a combination of resources such as a system or a device that can achieve a relatively complete and independent control process and operation. Workflow creation is performed by using the workcell as a basic cell, which is more in line with the characteristics of industrial control, can improve development integration, and reduce development complexity. For example, in the field of industrial technologies, the workcell may be defined based on an actual industrial scenario. For example, a process may be defined as corresponding to a workcell, or a workstation in the process may be defined as a workcell, or a workbench in the workstation may be defined as corresponding to a workcell, etc. Different workcells have different processes.

It is considered that service operations may be performed by different entities. The entities, for example, may be physical devices, may be persons, or may be other virtualized resources. For easy of description, in this implementation of the present invention, the physical devices, the persons, the virtualization terminology resources, and the like may be collectively referred to as resources. The resources usually refer to various operating entities that can execute the workflow on site. In a specific implementation, a resource as an operating entity may be used as a common configuration parameter of a function block node, and corresponding resource configuration may be performed on the required function block node during creation of a behavior tree. Alternatively, during creation of the function block node, the resource as the operating entity is configured for the function block node, so that the resource configuration does not need to be performed on the required function block node during the creation of the behavior tree. Alternatively, for ease of resource management, these resources may be represented in forms of resource nodes, and the resource nodes may be stored in forms of resource knowledge graphs. Each resource knowledge graph includes resource nodes, and a connection line representing a relationship between resource nodes.

Herein, the subject thesaurus associated with the subject placeholder may be displayed in a new pop-up window on the natural language sentence editing interface, and the subject occupying the subject placeholder may be determined from the subject thesaurus based on user selection, that is, the resource in the workcell may be determined. Optionally, the subject thesaurus may be displayed on the natural language sentence editing interface through a pull-down menu.

Step 3: Determine a predicate placeholder based on a second selection operation performed on the language element library.

Similarly, the user may select the predicate placeholder from the language element library, and drag the predicate placeholder to the natural language sentence editing interface to determine the predicate placeholder. Since dragging positions of the user are different, the predicate placeholder may be dragged to a rear of the subject placeholder, or may be dragged to a front of the subject placeholder. When the predicate placeholder is dragged to the front of the subject placeholder, the predicate placeholder may be automatically adjusted to the rear of the subject placeholder, to conform to a language habit.

Step 4: Determine, from a predicate thesaurus associated with the subject, a predicate occupying the predicate placeholder, where the predicate corresponds to a service operation of the resource.

Herein, the predicate thesaurus associated with the subject may be displayed in the new pop-up window on the natural language sentence editing interface, and the predicate occupying the predicate placeholder may be determined from the predicate thesaurus based on user selection, that is, the service operation that the resource can perform. Optionally, the predicate thesaurus may be displayed through the pull-down menu on the natural language sentence editing interface.

Step 5: Generate the natural language sentence based on the occupied subject placeholder and the occupied predicate placeholder, where the natural language sentence is adapted to be converted into a low-code representation describing a workflow, and the workflow represents that resource performs service operation.

Preferably, in the generated natural language sentence, a placeholder of each type does not has a visual effect, and a sentence constituent occupying the placeholder is merely displayed at a corresponding position.

It may be learned that the generated natural language sentence instructs the resource to perform the service operation, and therefore can be converted into the low-code representation describing the workflow. Therefore, in this implementation of the present invention, based on the operations performed on the placeholders and the libraries, the workflow may be conveniently described as the natural language sentence by using the semantic language element, and a person without programming knowledge may conveniently describe the workflow by using the natural language sentence, which reduce implementation difficulty of the workflow. Moreover, the natural language sentence may be converted into the low-code representation that can be recognized by an underlying device, which further enriches implementations of the workflow.

In an implementation, the method for generating a natural language sentence describing a workflow further includes at least one of the following: (1). determining an object placeholder based on a third selection operation performed on the language element library, and determining, from a BOM (bill of materials) associated with the service operation, an object occupying the object placeholder, where the object serves as an execution target of the service operation; (2). determining an adverbial placeholder based on a fourth selection operation performed on the language element library, and determining an adverbial occupying the adverbial placeholder based on input data of the service operation; (3). determining a complement placeholder based on a fifth selection operation performed on the language element library, and determining, from the BOM associated with the service operation, a complement occupying the complement placeholder, where the complement serves as a supplementary description of the service operation; (4). determining an attributive placeholder based on a sixth selection operation performed on the language element library, and determining, from a user input or the BOM associated with the service operation, an attributive occupying the attributive placeholder, where the attributive serves as a limiting description of the subject or the object; (5). determining an annotation placeholder based on a seventh selection operation performed on the language element library, and determining, from the user input, an annotation occupying the annotation placeholder; (6). determining a figure placeholder based on an eighth selection operation performed on the language element library, and determining, from the user input, a figure occupying the figure placeholder; and (7) determining a video placeholder based on a ninth selection operation performed on the language element library, and determining, from the user input, a video occupying the video placeholder.

In an implementation, the method for generating a natural language sentence describing a workflow further includes: determining a logic placeholder and a semantic expression placeholder based on a tenth selection operation performed on the language element library; determining, from the user input, a logic keyword occupying the logic placeholder and a semantic expression occupying the semantic expression placeholder; determining a logic execution branch based on the logic keyword and the semantic expression; and determining a natural language sentence corresponding to each logic execution branch. For example, the logic keyword may be a logic keyword in condition determining (if-then-else), or a composite logic (for example, switch-case-default, fallback, or guard), or the like. A logic value (which is usually true or false) corresponding to the semantic expression is calculated, and the preset logic execution branch corresponding to the logic value is selected by using the logic determined by the logic keyword.

In an implementation, the method for generating a natural language sentence describing a workflow further includes: generating a label of the natural language sentence based on an execution order of the natural language sentence. In this implementation of the present invention, the label may be used for representing an order serial number of the natural language sentence. For example, the label may be displayed at a beginning, or an end, or the like of the natural language sentence, to be used for identifying the execution order of the natural language sentence.

In an implementation, the method for generating a natural language sentence describing a workflow further includes: determining an exception placeholder based on an eleventh selection operation performed on the language element library; determining, from the user input, a label corresponding to the exception placeholder; selecting an exception type from an exception library corresponding to the exception placeholder; determining an exception execution branch when the exception type occurs during execution of a natural language sentence of the label; and determining a natural language sentence corresponding to the exception execution branch. For example, the exception type includes overheating and overvoltage. Correspondingly, the exception execution branch includes an exception processing process when the overheating occurs and an exception processing process when the overvoltage occurs.

In an implementation, the method for generating a natural language sentence describing a workflow further includes: determining a keypoint placeholder based on a twelfth selection operation performed on the language element library; and determining, from the user input, a keypoint occupying the keypoint placeholder, where the low-code representation includes a control corresponding to the keypoint, and when the control is triggered, a next keypoint of the keypoint in the workflow is executed.

Therefore, in this implementation of the present invention, definitions of semantic elements are further extended, to provide support for necessary low-code constituents such as a behavior tree logic, the semantic expression, the exception, the keypoint, the annotation, the figure, the video, and an index.

In an implementation, the method for generating a natural language sentence describing a workflow further includes: receiving a change request for the occupied subject placeholder in the natural language sentence; displaying the subject thesaurus, especially automatically displaying the subject thesaurus, based on the change request; determining, by the user from the subject thesaurus, an updated subject updating the occupied subject placeholder, where the updated subject corresponds to the updated resource; displaying (for example, automatically displaying) a predicate thesaurus associated with the updated subject; determining, from the predicate thesaurus associated with the updated subject, an updated predicate updating the occupied predicate placeholder (for example, the user selects the updated predicate from the predicate thesaurus associated with the updated subject), where the updated predicate corresponds to a service operation of the updated resource; and updating (for example, automatically updating) the natural language sentence based on the updated occupied subject placeholder and the updated occupied predicate placeholder. It may be learned that, in this implementation of the present invention, the subject may be conveniently changed to change the resource in the workflow.

In an implementation, the method for generating a natural language sentence describing a workflow further includes: receiving a change request for the occupied predicate placeholder in the natural language sentence; displaying (for example, automatically displaying) the predicate thesaurus associated with the subject based on the change request; determining, from the predicate thesaurus, an updated predicate updating the occupied predicate placeholder (for example, the user selects the updated predicate from the predicate thesaurus), where the updated predicate corresponds to an updated service operation of the resource; and updating (for example, automatically updating) the natural language sentence based on the occupied subject placeholder and the updated occupied predicate placeholder. It may be learned that, in this implementation of the present invention, the predicate may be conveniently changed to change the service operation in the workflow.

In addition, an embodiment of this application provides a natural language sentence conversion method. The natural language sentence determined in the above manner may be converted into an FBTD. The conversion method includes:
Step 1: Determine a first mapping relationship between a subject of a natural language sentence and a function block head of a function block, where the subject corresponds to a resource in a workcell.
Step 2: Determine a second mapping relationship between a predicate of the natural language sentence and a function block name of the function block, where the predicate corresponds to a service operation of the resource.
Step 3: Convert the natural language sentence into the function block, or convert the function block into the natural language sentence based on the first mapping relationship and the second mapping relationship, where the function block is presented in an FBTD, the function block is adapted to describe a workflow, and the workflow represents the resource to perform the service operation.

A process of adjusting a natural language sentence in this implementation of the present invention is exemplarily described by using a natural language sentence in a low-code architecture as an example.

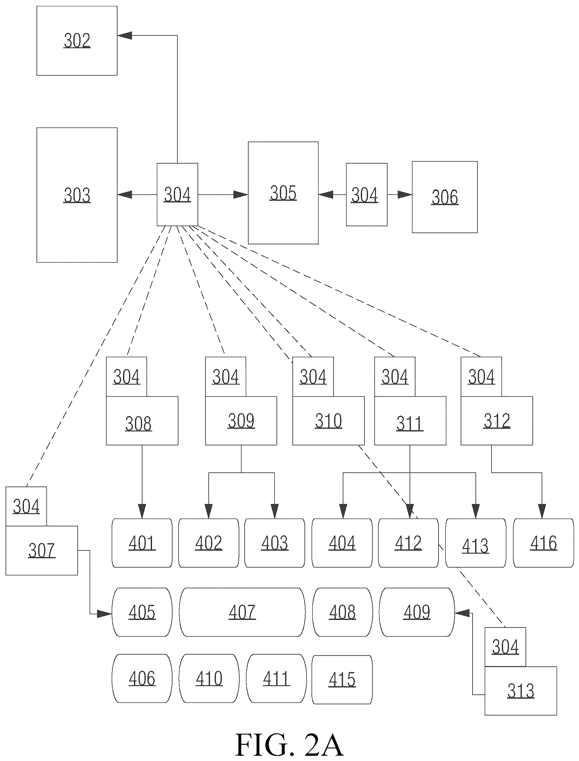

FIG. 2A exemplarily shows an exemplary schematic diagram for describing a workflow in a low-code architecture provided according to an embodiment of this application in a no-code manner according to an embodiment of this application. In the architecture, all exchange workpieces adopt a standardized universal runtime engineering exchange format, and metadata of the universal runtime engineering exchange format is easily tracked and managed.

A universal runtime engineering exchange model 304 includes a logic library 307 (for example, the logic library may be a behavior tree logic library) of a low-code platform, a resource library 308, a function block library 309, a customized thesaurus 310, a BOM 311, a universal language extension thesaurus 312, and a keypoint library 313. The logic library 307 provides a logic for occupying a logic placeholder 405, a semantic expression for occupying a semantic expression placeholder 407, and an exception type for occupying an exception placeholder 408. The keypoint library 313 provides a keypoint for occupying a keypoint placeholder 409. The resource library 308 provides a resource for occupying a subject placeholder 401. The function block library 309 provides a service operation for occupying a predicate placeholder 402 and input data of the service operation for occupying an adverbial placeholder 403. The BOM 311 provides an object for occupying an object placeholder 404, an attributive for occupying an attributive placeholder 412, and a complement for occupying a complement placeholder 413. The universal language extension thesaurus 312 provides a preposition automatically inserted into a natural language sentence.

Through a no-code universal language editor 302 in this implementation of this application that implements the method for generating a natural language sentence and the method for adjusting a natural language sentence, the natural language sentence may be generated and edited. A SOP in a natural language form may be generated by using a SOP editor without code semantics. Moreover, the generated natural language sentence (including the SOP) may be converted into a low-code behavior tree/FBTD 305. In the low-code behavior tree, function block node is presented in a form of a label graph. In the low-code FBTD, the function block node is presented in a form of a type graph. Then the low-code represented behavior tree/the FBTD 305 is parsed by using interpreter-driven runtime 306, to obtain a workflow represented in a form of node link assembly, and the workflow represented in the form of the node link assembly is compiled and downloaded to runtime of a main controller of a corresponding workcell, to execute the workflow. For example, the behavior tree/the FBTD 305 may be stored in a markup language, for example, an extensible markup language (XML), and may be validated by an XML Schema (XSD) prototype, to verify that an XML format of the behavior tree/the FBTD 305 is correct. After parsing the behavior tree/the FBTD 305, the interpreter-driven runtime 306 may obtain the workflow represented in the form of the node link assembly, and then compile and download the workflow to the runtime of the main controller of the corresponding workcell, to execute the workflow. An implementation of the present invention further provides a natural language sentence conversion method, which may convert a natural language sentence (For example, a natural language sentence generated without a preposition added, or a natural language sentences with a preposition added) determined based on the above manner into an FBTD. The method includes: Step (1): Determine a first mapping relationship between a subject of a natural language sentence and a function block head of a function block, where the subject corresponds to a resource. Step (2): Determine a second mapping relationship between a predicate of the natural language sentence and a function block name of the function block, where the predicate corresponds to a service operation of the resource. Step (3): Convert the natural language sentence into the function block, or convert the function block into the natural language sentence based on the first mapping relationship and the second mapping relationship, where the function block is presented in an FBTD, the function block is adapted to describe a workflow, and the workflow represents the resource to perform the service operation. It may be learned that the existence of the preposition is ignored during the conversion.

A specific process of converting the natural language sentence into the FBTD is exemplarily described above. A person skilled in the art may realize that the description is merely exemplary and is not intended to limit the protection scope of the implementations of the present invention. Moreover, after the natural language sentence is converted into the FBTD, the FBTD may be further converted into a behavior tree, which is not limited in this implementation of the present invention.

An OT domain generally refers to an OT, which integrates hardware and software, and detects or triggers a change or an event occurring in a process in an enterprise by directly monitoring and/or controlling a physical device (which is referred to as an OT device). The OT monitors or changes, for example, a physical state of an industrial control system (ICS) by using a computer. The ICS is a facility, a system, and a device achieved based on the computer, and is configured to remotely monitor and/or control a key industrial process, to achieve a physical function. The term "OT" is used for distinguish the ICS from a conventional IT system in terms of technical implementation and function. Currently, many IT low-code development tools or platforms exist on a market. Some of the tools are used for a usage scenario of an loT, and target an experienced IT engineer, and it is difficult for an OT engineer and a junior IT engineer to understand paradigms of the tools. However, some of the tools are more applicable to a usage scenario of low code development in an IT domain, and cannot be well applicable to the OT domain. The above method for generating a natural language sentence generation describing a workflow in this embodiment may be used in the OT domain as a no-code OT domain development method. Correspondingly, the workflow may be an OT domain workflow. The workcell may be a workcell in the OT domain. The OT device may include but is not limited to an loT device, a programmable logic controller (PLC), robotics, a manual process, and an industrial personal computer (IPC).

In addition, in this embodiment of this application, it is considered that integration of the IT domain and the OT domain becomes increasingly important in a process of enterprise digitalization conversion. To integrate the IT domain and the OT domain into an ITOT system, a current problem that needs to be resolved urgently is how an enterprise collects OT domain data and controls an OT domain process in a manner that is easily understood and is not IT domain programming. Therefore, the above method for generating a natural language sentence generation describing a workflow in this embodiment may be used in the ITOT system as a no-code OT domain development method that can be integrated with the IT domain.

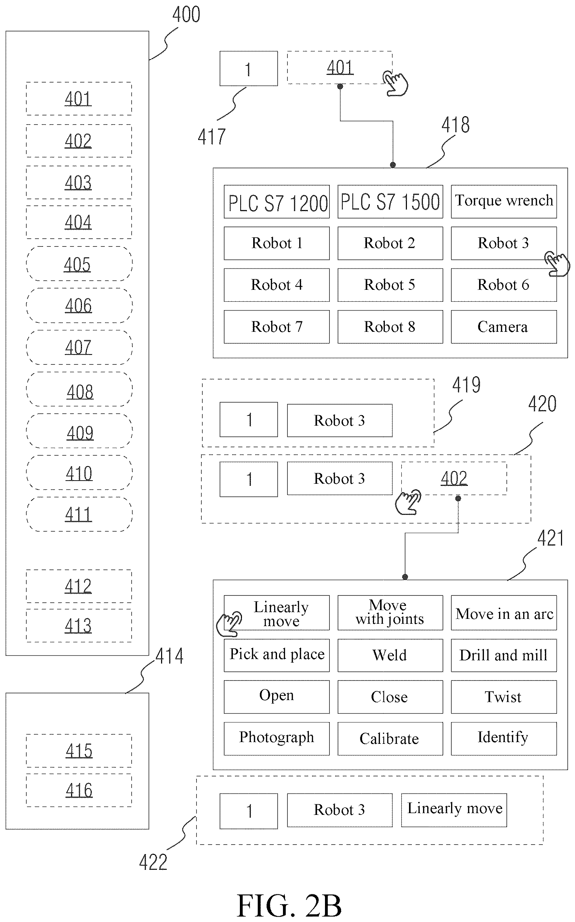

FIG. 2B is a schematic diagram of an interaction based on a language element library according to an embodiment of this application.

In FIG. 2B, a language element library 400 is displayed. The language element library 400 includes a subject placeholder 401, a predicate placeholder 402, an adverbial placeholder 403, an object placeholder 404, a logic placeholder 405, an annotation placeholder 406, a semantic expression placeholder 407, an exception placeholder 408, a keypoint placeholder 409, a figure placeholder 410, a video placeholder 411, an attributive placeholder 412, and a complement placeholder 413. The interaction process includes automatic label generation processing 415 and automatic preposition generation processing 416. The automatic preposition generation processing 416 may generate a preposition for a natural language sentence to improve readability. The automatic label generation processing 415 automatically generates a label 417 for the natural language sentence based on an execution order of the natural language sentence. In this embodiment, the label 417 is a serial number label.

A user drags any placeholder from the language element library 400 to a natural language sentence editing interface. As shown in FIG. 2B, the user first drags the subject placeholder 401, and the label 417 for the natural language sentence is automatically generated. In this case, a subject thesaurus 418 may be automatically displayed or displayed through triggering of the user, to help the user to select a subject occupying the subject placeholder 401 from the subject thesaurus 418. Assuming that the user selects a "robot 3", the "robot 3" occupies the subject placeholder 401, and a natural language sentence 419 after the subject is determined is obtained. Then the user drags the predicate placeholder 402 from the language element library 400 after the "robot 3" of the natural language sentence 419 after the subject is determined, and obtains a natural language sentence 420 after the predicate placeholder is dragged. A predicate thesaurus 421 associated with the "robot 3" (that is, a service operation that the "robot 3" may perform) is displayed, for the user to select a predicate occupying the predicate placeholder 402 from the predicate thesaurus 421. Assuming that the user selects "linearly move", the "linearly move" occupies the predicate placeholder 402, and a natural language sentence 422 "A robot 3 linearly moves" after the predicate is determined is obtained.

In this case, the user may click/tap the "robot 3" to re-display the subject thesaurus 418, to help the user change the subject. Correspondingly, the user may click/tap the "linearly move" to re-display the predicate thesaurus 421, to help the user change the predicate.

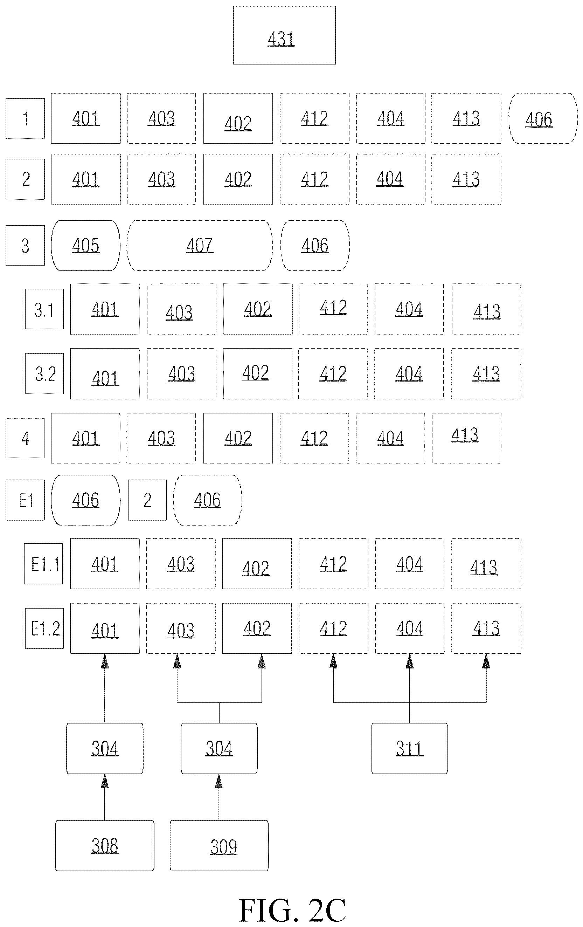

A universal language word order template for a SOP may be established based on this implementation of the present invention. FIG. 2C is a schematic diagram of a universal language word order template of a SOP according to an embodiment of this application. A template 431 includes a plurality of natural language sentences determined based on the interaction process shown in FIG. 2B, and each of the natural language sentences has a label to distinguish between execution orders. Natural language sentences including all of the execution orders may be combined into a complete SOP. In FIG. 2C, a label E1 represents exception processing. The exception processing is configured to automatically perform processing on an exception during execution of a natural language sentence corresponding to a label 2. The exception processing process includes a natural language sentence with a label of E1.1 and a natural language sentence with a label of E1.2.

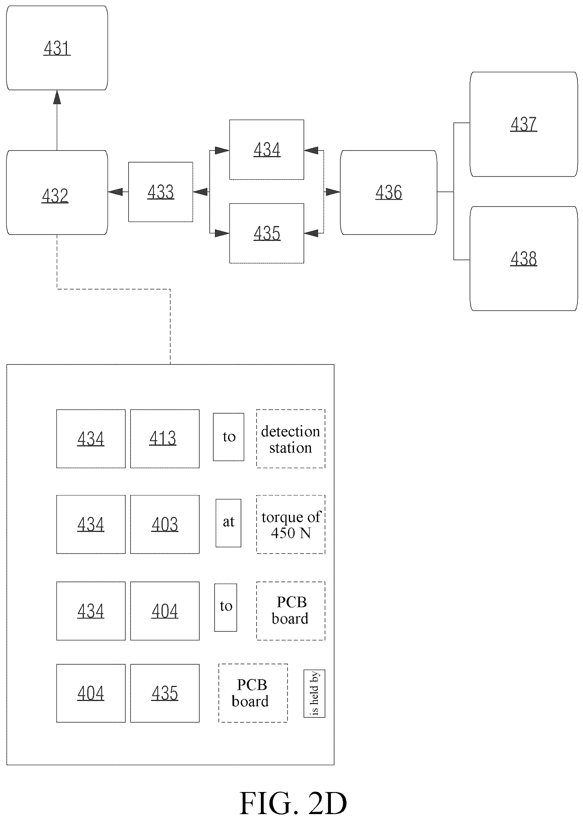

FIG. 2D is a schematic diagram of an architecture for automatically generating a preposition according to an embodiment of this application. In FIG. 2D, a process of automatically generating the preposition is described by using a SOP template 431 as an example. A language specific grammar 436 determines to use a Chinese semantic thesaurus 437 including Chinese prepositions (for example, 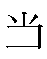 , 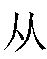 , 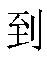 , 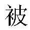 , 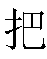 , 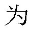 , 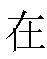 , 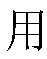 , 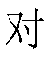 , 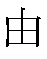 ) or an English semantic thesaurus 438 including English prepositions (for example, from, in, at, for, on, into, by, when). A rule-based linking engine 432 parses the SOP template 431. The linking engine 432 automatically analyzes placeholders at different positions in the SOP template 431 to generate prepositions 433 included in a determined thesaurus (the Chinese semantic thesaurus 437 or the English semantic thesaurus 438). The preposition 433 includes a prepositional preposition 434 and a postpositional preposition 435. When the linking engine 432 analyzes a complement, a preposition-complement structure may be adopted, to generate the preposition before the complement, for example, "to a detection station". When the linking engine 432 analyzes an adverbial, a preposition-adverbial structure may be adopted, to generate the preposition before the adverbial, for example, "with a torque of 450 N". When the linking engine 432 analyzes an object, a preposition-object structure may be adopted, to generate the preposition before the object, for example, "to a circuit board". When the linking engine 432 analyzes a prepositional object (for example, a user drags an object placeholder to a beginning of a sentence), an object-preposition structure may be adopted, to generate the preposition after the object, for example, "a circuit board is".

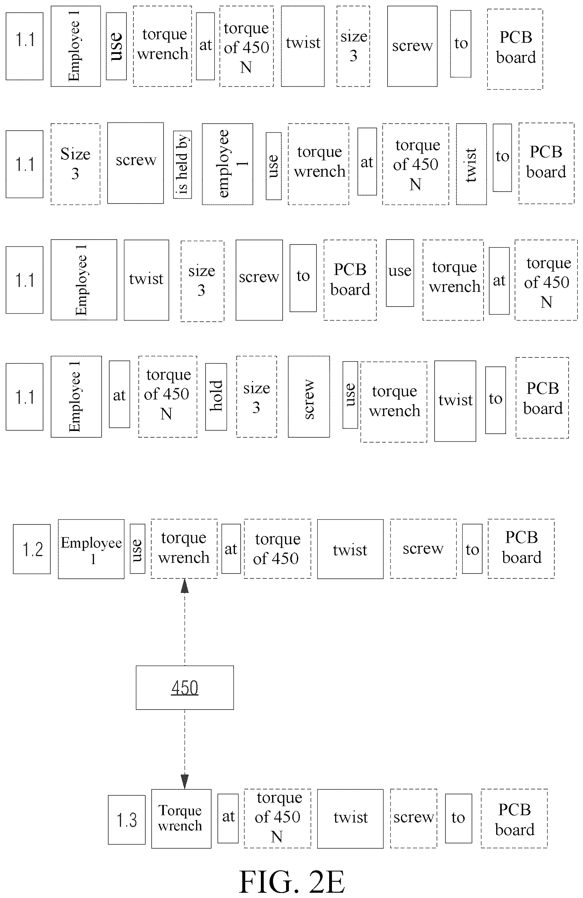

FIG. 2E is an exemplary schematic diagram of automatically generating a preposition according to an embodiment of this application. In FIG. 2E, for a natural language sentence with a first label of 1.1, "Employee use torque wrench 450 torques twist screw circuit board" may be obtained through an occupation operation performed on a placeholder. Through analysis of types and positions of placeholders, a preposition "use" may be automatically generated between an "employee" and a "torque wrench", a preposition "at" may be automatically generated between the "torque wrench" and "450 torques", and a preposition "to" can be automatically generated between a "screw" and a "circuit board". A user may move a placeholder based on a personal habit to change a position of the placeholder. Correspondingly, the preposition is updated based on the updated position of the placeholder. In FIG. 2E, four natural language sentences with the label of 1.1 have the same meaning, and may be converted into the same low-code representation. In a specific case, complement-to-subject conversion processing 450 may be performed. In the complement-to-subject conversion processing 450, when an automation upgrade is completed, the complement may be converted into the subject. For example, when a robot replaces human, an end executor (for example, a torque wrench) may perform an action without human assistance. Therefore, the torque wrench serves as a body of a controller, and therefore is referred to as a subject. In this case, the original subject ("employee 1") and the preposition (that is, "by using") before the complement converted into the subject are deleted.

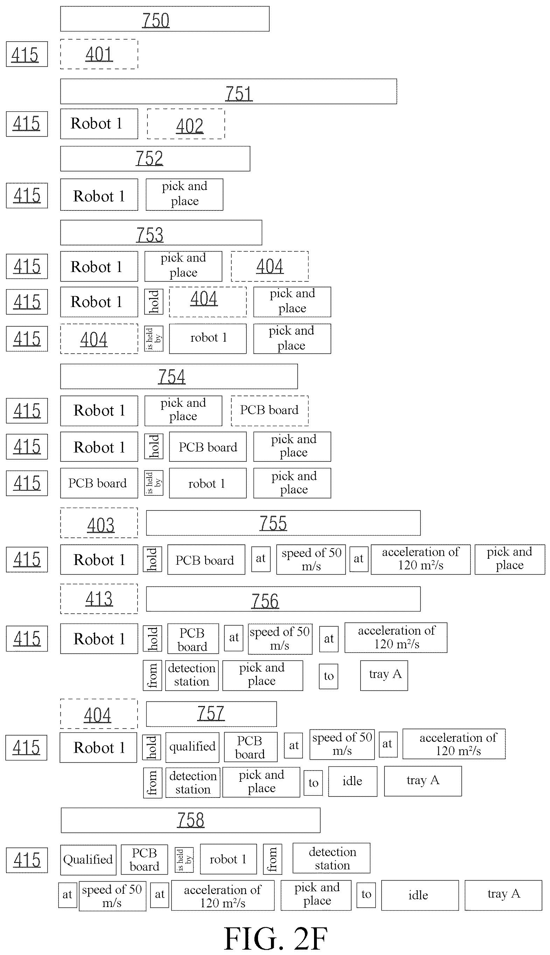

FIG. 2F is an exemplary schematic diagram of an overall semantic editing process according to an embodiment of this application. The overall semantic editing process includes:

First step: Perform subject placeholder dragging processing 750. A subject placeholder 401 is dragged from a language element library to a natural language sentence editing interface. Moreover, a label 415 is generated at a fixed position (for example, a beginning of a sentence).

Second step: Perform subject determining and predicate placeholder dragging processing 751. A subject thesaurus including each resource is displayed, for a user to select and drag a subject (a resource) occupying the subject placeholder 401 from the subject thesaurus. For example, a "robot 1" as the subject is dragged from the subject thesaurus including a large number of resources. Then a predicate placeholder 402 (which is usually dragged after the subject) is dragged from the language element library.

Third step: Perform predicate determining processing 752. A predicate thesaurus associated with the "robot 1" is displayed, the predicate thesaurus associated with the "robot 1" includes all service operations that the "robot 1" can perform. The user selects and drags a service operation occupying the predicate placeholder 402 from the predicate thesaurus associated with the "robot 1". For example, the dragged predicate is picking and placing.

Fourth step: Perform object placeholder dragging and first preposition generation processing 753. An object placeholder 404 is dragged from the language element library to the natural language sentence editing interface. Based on the dragging operation performed by the user, a position of the object placeholder 404 may not be fixed. Moreover, depending on the position of the object placeholder 404, a preposition related to the object is automatically generated. In this case, overall semantics corresponding to each preposition remain the same. For example, when the object placeholder 404 is located after the subject and the predicate, no preposition is generated. When the object placeholder 404 is located between the subject and the predicate, a preposition "by" is generated between the object placeholder 404 and the subject. When the object placeholder 404 is located before the subject, a preposition "is/are" is generated between the object placeholder 404 and the subject.

Fifth step: Perform object determining processing 754. A to-be-picked object may be determined as a circuit board based on a BOM, and the circuit board may be determined as an object filling the object placeholder 404.

Sixth step: Perform adverbial placeholder dragging, adverbial determining, and second preposition generation processing 755. One or more adverbial placeholders are dragged from the language element library to the natural language sentence editing interface. Moreover, an adverbial filling the adverbial placeholder may be determined through input data of the service operation or a user input, and a preposition related to the adverbial is generated. For example, it is assumed that the input data of the service operation "pick and place" includes two parameters, namely, a speed and an acceleration. Specific values of the speed and the acceleration may be provided based on the user input (assuming that the speed is 50 m/s and the acceleration is 120 m/s²), the adverbials include the "speed of 50 m/s" and the "acceleration of 120 m/s²", and prepositions "at" are respectively generated before the adverbials.

Seventh step: Perform complement placeholder dragging, complement determining, and second preposition generation processing 756. One or more complement placeholders are dragged from the language element library to the natural language sentence editing interface (for example, an end of the sentence). Moreover, a complement filling the complement placeholder may be determined through output data of the service operation or the user input, and a preposition related to the complement is generated. For example, assuming that the user input includes a "detection station" as a starting point object of the service operation (for example, "pick and place") and a "tray A" as an ending point object, the complements include the "detection station" and the "tray A", and a preposition "from" corresponding to the starting point object is generated before the "detection station", and a preposition "to" corresponding to the ending point object is generated before the "tray A".

Eighth step: Perform attributive placeholder dragging and attributive determining processing 757. One or more attributive placeholders (which are usually dragged before a noun to limit the noun) are dragged from the language element library to the natural language sentence editing interface. Moreover, an attributive filling the attributive placeholder may be determined through a BOM or the user input.

Ninth step: Perform word order adjustment processing 758. In this case, each placeholder may be dragged, and the automatically generated preposition is adjusted based on the updated placeholder position. For example, when the object is prepositioned to form a passive voice, a sentence is more fluent through addition of the preposition "be".

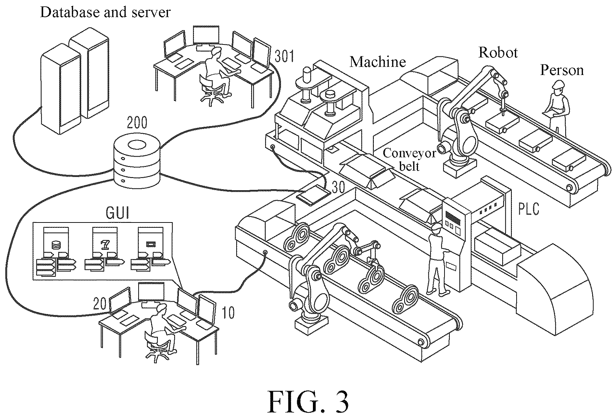

FIG. 3 is an application scenario of a method for adjusting a natural language sentence in an industrial automation field according to an embodiment of this application.

In FIG. 3, a low-code development tool 10 generates a natural language sentence describing an OT domain workflow after a user performs a selection operation, a dragging operation, and a filling operation on placeholders in the language element library. Moreover, the low-code development tool 10 automatically adds a preposition in the natural language sentence based on a type attribute of a placeholder and a position of the placeholder in the natural language sentence, to adjust the natural language sentence, for ease of user understanding. The OT domain workflow is defined as operations to be performed by a production line as a workcell, as shown on a right side of FIG. 3. The low-code development tool 10 converts the natural language sentence into a behavior tree corresponding to the OT domain workflow. The behavior tree is posted to runtime 30, so that the runtime 30 controls production line operations completing the workcell. In addition, a corresponding microservice may be generated by the microservice generator 20 based on the behavior tree and registered in a knowledge platform 200. In this way, a code development tool 301 of an IT domain may call the corresponding microservice through the knowledge center 200.

A user may select a placeholder, drag the placeholder, or enter content in the placeholders at a lower left corner GUI as shown in FIG. 3, to edit the natural language sentence. For example, required data (for example, a workpiece processing parameter) is obtained first from a database and a server through the knowledge platform 200, and operation of an entire workcell is controlled. The workcell herein is a production line. The production line includes a machine, a conveyor belt, a robot arm, a person, a programmable logic controller (PLC), an accessory gear box (AGB), and the like. In a specific implementation, the code development tool 301 in the IT domain may be located on a same hardware device as the low-code development tool 10, for example, on a same computer.

The application scenario of adjusting a natural language sentence is exemplarily described above by using the industrial automation field as an example. A person skilled in the art may realize that the description herein is merely exemplary and is not intended to limit the protection scope of the implementations of the present invention.

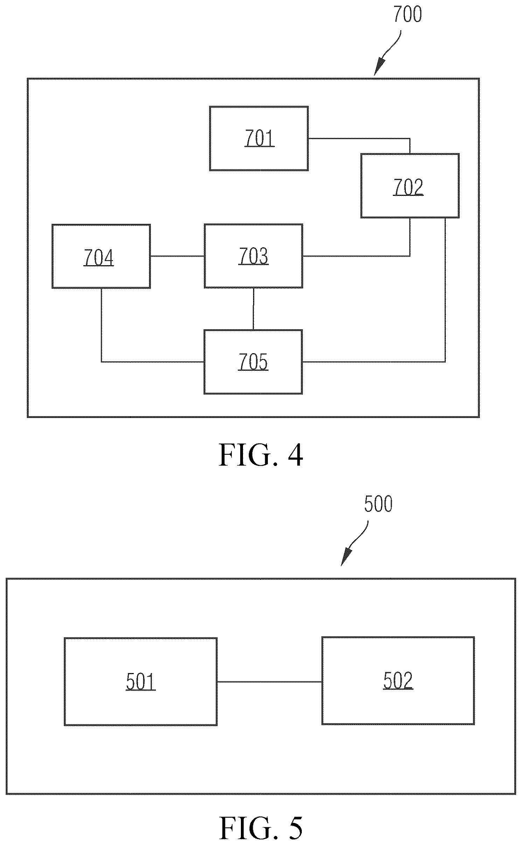

FIG. 4 is an exemplary structural diagram of an apparatus for adjusting a natural language sentence according to embodiments of this application. The apparatus 700 for adjusting a natural language sentence includes: a receiving module 701, configured to receive a natural language sentence including a placeholder, where the placeholder includes a type attribute, and the placeholder is occupied by a sentence constituent matching the type attribute; a determining module 702, configured to determine a position of the placeholder in the natural language sentence; and an addition module 703, configured to add a preposition to the natural language sentence based on the type attribute of the placeholder and the position of the placeholder in the natural language sentence.

In an implementation, the addition module 703 is configured to: determine a first sentence constituent occupying a subject placeholder in the natural language sentence as a subject of the natural language sentence; determine a second sentence constituent occupying a predicate placeholder in the natural language sentence as a predicate of the natural language sentence; determine a third sentence constituent occupying an object placeholder in the natural language sentence as an object in the natural language sentence; add a first preposition between the object and the subject when the object is located between the subject and the predicate; and add a second preposition between the object and the subject when the object is located before the subject and the predicate.

In an implementation, the addition module 703 is configured to: determine a fourth sentence constituent occupying a complement placeholder in the natural language sentence as a first complement of the natural language sentence, where the first complement is determined based on a user input; and add a third preposition before the first complement.

In an implementation, the addition module 703 is configured to: determine a fifth sentence constituent occupying the complement placeholder in the natural language sentence as a second complement of the natural language sentence, where the second complement is determined based on output data of a service operation, and the service operation is determined based on the predicate occupying the predicate placeholder in the natural language sentence; and add a fourth preposition before the second complement.

In an implementation, the addition module 703 is configured to: determine a sixth sentence constituent occupying an adverbial placeholder in the natural language sentence as an adverbial of the natural language sentence, where the adverbial is determined based on input data of the service operation, and the service operation is determined based on the predicate occupying the predicate placeholder in the natural language sentence; and add a fifth preposition before the adverbial.

In an implementation, the apparatus further includes an update module 704, configured to: move the placeholder in natural language sentence based on a user-triggered instruction; determine an updated position of the placeholder in the natural language sentence; and update the preposition in the natural language sentence based on the type attribute of the placeholder and the update position of the placeholder in the natural language sentence.

In an implementation, the natural language sentence is adapted to describe a workflow. The workflow represents that a resource in a workcell performs the service operation. In an implementation, the apparatus further includes an execution module 705, configured to: convert natural language sentence into a low-code representation describing workflow; parse the low-code representation, to obtain a workflow represented in a form of node link assembly; and compile and download the workflow represented in the form of the node link assembly to runtime of a main controller of a corresponding workcell, to execute the workflow.

FIG. 5 is an exemplary structural diagram of an apparatus with a memory-processor architecture for adjusting a natural language sentence according to embodiments of this application. The apparatus 500 for adjusting a natural language sentence includes at least one memory 501 and at least one processor 502. The at least one processor 502 is configured to invoke a computer program stored in the at least one memory 501, to perform the method for adjusting a natural language sentence in the embodiments of this application.

Specifically, a system or a device equipped with a storage medium may be provided. The storage medium stores computer-readable code for implementing the functions of any of the above implementations, and enables a computer (or a central processing unit (CPU) or a microprocessor unit (MPU)) of the system or the device to read and execute the computer-readable code stored in the storage medium. In addition, an operating system or the like running in the computer may be enabled through computer-readable code-based instructions to complete some or all actual operations. The computer-readable code read from the storage medium may also be written into a memory arranged in an extension board inserted in the computer, or may be written into a memory arranged in an extension unit connected to the computer, and then a CPU or the like mounted to the extension board or the extension unit may be enabled to execute some or all of the actual operations through the computer-readable code-based instructions, to implement the functions of any of the above implementations. In this embodiment, an embodiment of the computer-readable medium includes, but is not limited to, a floppy disk, a portable compact disk read-only memory (CD-ROM), a magnetic disk, an optical disk (for example, the CD-ROM, a compact disk-recordable (CD-R), a compact disk-rewritable (CD-RW), a digital video disk-read only memory (DVD-ROM), a digital video disk-random access memory (DVD-RAM), a digital video disk-rewritable (DVD-RW), a DVD+RW), a memory chip, a ROM, a RAM, an application specific integrated circuit (ASIC), a configured processor, an all-optical medium, all magnetic tapes, or another magnetic medium, or any another medium from which a computer processor may read instructions. In addition, computer-readable media in various other forms may send or carry instructions to the computer, including a router, a private or public network, or another wired and wireless transmission device or channel. For example, computer-readable instructions may be downloaded from a server computer or a cloud through a communication network. The instructions may include code of any computer programming language, including C, C++, C language, Visual Basic, java, and JavaScript.

It should be noted that, not all steps and modules in the above processes and diagrams of the system structures are necessary, and some steps or modules may be omitted based on an actual requirement. An execution order of the steps is not fixed and may be adjusted as required. The system structure described in the above embodiments may be a physical structure or a logical structure. To be specific, some modules may be implemented by the same physical entity, or some modules may be implemented by a plurality of physical entities, or may be jointly implemented by some components in a plurality of independent devices.

The above descriptions are merely preferred embodiments of the present invention and are not intended to limit the present invention. Any modification, equivalent replacement, or improvement made within the spirit and principle of the present invention shall fall within the protection scope of the present invention.

## Claims

1. A method (100) for adjusting a natural language sentence, the method comprising:
receiving or obtaining a natural language sentence comprising a placeholder, wherein the placeholder comprises a type attribute, and the placeholder is occupied by a sentence constituent matching the type attribute (101);
determining a position of the placeholder in the natural language sentence (102); and
adding a preposition to the natural language sentence based on the type attribute of the placeholder and the position of the placeholder in the natural language sentence (103).

2. The method (100) for adjusting a natural language sentence according to claim 1, wherein
adding a preposition to the natural language sentence based on a type of the placeholder and the position of the placeholder in the natural language sentence (103) comprises:
determining a first sentence constituent occupying a subject placeholder in the natural language sentence as a subject of the natural language sentence;
determining a second sentence constituent occupying a predicate placeholder in the natural language sentence as a predicate of the natural language sentence;
determining a third sentence constituent occupying an object placeholder in the natural language sentence as an object of the natural language sentence;
adding a first preposition between the subject and the object when the object is located between the subject and the predicate; and
adding a second preposition between the object and the subject when the object is located before the subject and the predicate.

3. The method (100) for adjusting a natural language sentence according to claim 1 or 2, wherein
adding a preposition to the natural language sentence based on a type of the placeholder and the position of the placeholder in the natural language sentence (103) comprises:
determining a fourth sentence constituent occupying a complement placeholder in the natural language sentence as a first complement of the natural language sentence, wherein the first complement is determined based on a user input; and
adding a third preposition before the first complement.

4. The method (100) for adjusting a natural language sentence according to any of claims 1 to 3, wherein
adding a preposition to the natural language sentence based on a type of the placeholder and the position of the placeholder in the natural language sentence (103) comprises:
determining a fifth sentence constituent occupying the complement placeholder in the natural language sentence as a second complement of the natural language sentence, wherein the second complement is determined based on output data of a service operation, and the service operation is determined based on the predicate occupying the predicate placeholder in the natural language sentence; and
adding a fourth preposition before the second complement.

5. The method (100) for adjusting a natural language sentence according to any of claims 1 to 3, wherein
adding a preposition to the natural language sentence based on a type of the placeholder and the position of the placeholder in the natural language sentence (103) comprises:
determining a sixth sentence constituent occupying an adverbial placeholder in the natural language sentence as an adverbial of the natural language sentence, wherein the adverbial is determined based on input data of the service operation, and the service operation is determined based on the predicate occupying the predicate placeholder in the natural language sentence; and
adding a fifth preposition before the adverbial.

6. The method (100) for adjusting a natural language sentence according to any of claims 1 to 5, the method further comprising:
moving the placeholder in the natural language sentence based on a user-triggered instruction;
determining an updated position of the placeholder in the natural language sentence; and
updating the preposition in the natural language sentence based on the type attribute of the placeholder and the updated position of the placeholder in the natural language sentence.

7. The method (100) for adjusting a natural language sentence according to any of claims 1 to 6, wherein
the natural language sentence is adapted to describe a workflow, and the workflow represents that a resource in a workcell performs the service operation.

8. The method (100) for adjusting a natural language sentence according to claim 7, the method further comprising:
converting the natural language sentence into a low-code representation describing the workflow;
parsing the low-code representation, to obtain a workflow represented in a form of node link assembly; and
compiling and downloading the workflow represented in the form of the node link assembly to runtime of a main controller of a corresponding workcell, to execute the workflow.

9. An apparatus (700) for adjusting a natural language sentence, the apparatus comprising:
a receiving module (701), configured to receive a natural language sentence comprising a placeholder, wherein the placeholder comprises a type attribute, and the placeholder is occupied by a sentence constituent matching the type attribute;
a determining module (702), configured to determine a position of the placeholder in the natural language sentence; and
an addition module (703), configured to add a preposition to the natural language sentence based on the type attribute of the placeholder and the position of the placeholder in the natural language sentence.

10. The apparatus (700) for adjusting a natural language sentence according to claim 9, wherein
the addition module (703) is configured to: determine a first sentence constituent occupying a subject placeholder in the natural language sentence as a subject of the natural language sentence; determine a second sentence constituent occupying a predicate placeholder in the natural language sentence as a predicate of the natural language sentence; determine a third sentence constituent occupying an object placeholder in the natural language sentence as an object of the natural language sentence; add a first preposition between the subject and the object when the object is located between the subject and the predicate; and add a second preposition between the object and the subject when the object is located before the subject and the predicate.

11. The apparatus (700) for adjusting a natural language sentence according to claim 9 or 10, wherein
the addition module (703) is configured to: determine a fourth sentence constituent occupying a complement placeholder in the natural language sentence as a first complement of the natural language sentence, wherein the first complement is determined based on a user input; and add a third preposition before the first complement.

12. The apparatus (700) for adjusting a natural language sentence according to any of claims 9 to 11, wherein
the addition module (703) is configured to: determine a fifth sentence constituent occupying the complement placeholder in the natural language sentence as a second complement of the natural language sentence, wherein the second complement is determined based on output data of a service operation, and the service operation is determined based on the predicate occupying the predicate placeholder in the natural language sentence; and add a fourth preposition before the second complement.

13. The apparatus (700) for adjusting a natural language sentence according to any of claims 9 to 12, wherein
the addition module (703) is configured to: determine a sixth sentence constituent occupying an adverbial placeholder in the natural language sentence as an adverbial of the natural language sentence, wherein the adverbial is determined based on input data of the service operation, and the service operation is determined based on the predicate occupying the predicate placeholder in the natural language sentence; and add a fifth preposition before the adverbial.

14. The apparatus (700) for adjusting a natural language sentence according to any of claims 9 to 13, the apparatus further comprising:
an update module (704), configured to: move the placeholder in the natural language sentence based on a user-triggered instruction; determine an updated position of the placeholder in the natural language sentence; and update the preposition in the natural language sentence based on the type attribute of the placeholder and the updated position of the placeholder in the natural language sentence.

15. The apparatus (700) for adjusting a natural language sentence according to any of claims 9 to 14, wherein
the natural language sentence is adapted to describe a workflow, and the workflow represents that a resource in a workcell performs the service operation.

16. The apparatus (700) for adjusting a natural language sentence according to claim 15, the apparatus further comprising:
an execution module (705), configured to: convert the natural language sentence into a low-code representation describing the workflow; parse the low-code representation, to obtain a workflow represented in a form of node link assembly; and compile and download the workflow represented in the form of the node link assembly to runtime of a main controller of a corresponding workcell, to execute the workflow.

17. An apparatus (500) for adjusting a natural language sentence, the apparatus comprising:
at least one memory (501), configured to store computer-readable code; and
at least one processor (502), configured to invoke the computer-readable code to perform the steps of the method (100) for adjusting a natural language sentence according to any of claims 1 to 8.

18. A computer-readable medium, storing computer-readable instructions, wherein the computer-readable instructions, when executed by a processor, cause the processor to perform the steps of the method (100) for adjusting a natural language sentence according to any of claims 1 to 8.

19. A computer program product, tangibly stored in a computer-readable medium and comprising computer-readable instructions, wherein the computer-readable instructions, when executed, cause at least one processor to perform the steps of the method (100) for adjusting a natural language sentence according to any of claims 1 to 8.
